# EUROPEAN PATENT SPECIFICATION

(11) **EP 1 091 464 B1**
(45) Date of publication and mention of the grant of the patent: **20.05.2009**
(21) Application number: 99307798.1
(22) Date of filing: 04.10.1999
(51) Int. Cl.: H02G 3/12

(54) **Accessory mounting for trunking**
Träger für Installationsgeräte zur Benutzung mit Installationskanälen
Support de montage d'appareils dans une goulotte

(43) Date of publication of application: 11.04.2001
(73) Proprietor: C & C MARSHALL LIMITED, Hastings, East Sussex TN34 1YJ (GB)
(72) Inventor: Clements, William Arthur John, Pett, Hastings, East Sussex TN35 4HY (GB)
(74) Representative: Lamb, John Baxter

(56) References cited:
- EP-A- 0 289 410
- GB-A- 2 211 365
- GB-A- 2 229 869

## Description

The present invention provides an accessory mounting for use in trunking, a kit for forming an accessory mounting for use in trunking and a combination of trunking and an accessory mounting.

An accessory mounting and a kit for forming an accessory mounting of this sort, according to the preambles of claims 1 and 6 are disclosed in GB 2 229 869 A.

Electrical and communications trunking is widely used to provide electrical power and communication services within buildings.

Such trunking typically comprises a longitudinally extending channel of indefinite length defined by a longitudinally extending floor member and a pair of longitudinally extending wall members projecting from the floor member. Various longitudinally extending mounting means are typically provided for supporting within the channel longitudinally electrically extending electrical conductors (commonly called busbars) or electrical or optical communication cables.

Access to electrical power or communications can be provided at any selected point along the length of the trunking by accessories, such as electrical sockets, communication sockets and the like, which engage with respective conductors or cables. Such accessories typically comprise accessory mountings as part of their design, or are fixed in accessory boxes which provides a rigid support for the accessory and which can be conveniently engaged at any suitable point in the trunking. Lid members may be provided to give a flush surface to the trunking between accessories.

The trunking is typically mounted on walls extending in the horizontal direction, but it may be mounted extended in any suitable direction, including vertically.

An accessory mounting may be configured to support a plurality of similar or different accessories if necessary, for example double electrical power sockets.

The present inventors have realised that considerable simplification of the equipment and stores necessary for installing trunking, or of the methods of manufacturing such equipment and stores, can be obtained if the accessory mounting is formed from a kit which includes a longitudinally extending member which can be cut to a suitable length to house one, two or more accessories.

Accordingly, the present invention provides an accessory mounting for use in trunking of the sort comprising a longitudinally extending channel of indefinite length defined by a longitudinally extending floor member and at least two longitudinally extending wall members projecting from the floor member, the accessory mounting comprising
(a) an integrally formed channel-shaped member extending for a defined length in the direction of the channel, the channel-shaped member having first and second end parts and being configured to fit inside the channel of the trunking in use, and
(b) cover means,
the channel-shaped member being engaged with the cover means, the cover means being engageable with the trunking, the channel-shaped member being fixed in the trunking by the cover means.

The present invention further provides a kit for forming an accessory mounting for use in trunking of the sort comprising a longitudinally extending channel of indefinite length defined by a longitudinally extending floor member and at least two longitudinally extending wall members projecting from the floor member, the kit comprising:
(a) an integrally formed channel-shaped member of indefinite length extending in the direction of the channel, the channel-shaped member being configured to fit inside the channel of the trunking in use, and
(b) a cover means,
whereby, in use, the channel-shaped member can be cut or divided to a length sufficient to accommodate a desired number of accessories, the cover means comprising means for engaging the channel-shaped member and means for engaging the trunking, whereby the channel-shaped member may be fixed in the trunking by the cover means.

Because the channel-shaped member is configured to engage with the cover means and the trunking, there need not be any direct engagement between the channel-shaped member and the trunking.

According to an embodiment of the invention the channel-shaped member will be of length sufficient to accommodate a defined number of accessories.

A further embodiment of the present invention provides a combination of an accessory mounting according to the present invention and trunking.

It is an essential feature of the present invention that there is a channel-shaped member. A further embodiment of the invention provides end wall parts for engaging the first and second ends or a cover part, or both.

The trunking may of any suitable type. It is suitably made of cast, moulded or extruded material, for example thermoplastic material or metal, particularly uPVC or aluminium.

Suitably, the trunking comprises members projecting from the floor member for engaging with cables, conductors, busbars, optical fibres etc. The trunking may comprise means defining additional or subsidiary longitudinally extending channels.

Suitably, it comprises lid means for closing the channel. Suitable trunking is described for example in GB-A-2253096 and GB-A-2282278.

In the embodiment of the invention relating to a kit, the channel-shaped member may be supplied in any length. The channel-shaped member may be cut to the desired length or it may be provided with weakenings whereby it can be snapped apart into parts of the desired length. The desired length will typically correspond to a length large enough to accommodate one, two or more accessories. Preferably, the channel-shaped member as supplied will be long enough to accommodate at least two accessories

In this way, the number of parts required to assemble accessory mountings for trunking is much reduced. Instead of having separate designs of accessory mounting for one, two or more accessories, a simple set of parts comprising channel-shaped member, end parts and, optionally, cover means can be used, the channel-shaped member being cut or divided to the desired size.

The channel-shaped member preferably comprises a longitudinally extending channel-floor member and at least two longitudinally extending channel-wall members, preferably formed at the extremities of the channel-floor member.

The channel-shaped member may be suitably made of cast, moulded, formed (ie provided by folding and cutting) or extruded material, for example thermoplastic or metal, particularly uPVC or aluminium. It is particularly preferred that it is formed of extruded material.

Preferably, the ends of the channel-shaped member lie at right angles to the longitudinal direction of the channel-shaped member.

The end wall parts preferably substantially completely close the ends of the channel-shape member.

The end walls parts are preferably releasably engageable with the ends of the channel-shaped member so that the accessory mounting can be taken apart for re-use.

Any suitable means may be used for releasably engaging the end wall parts with the channel-shaped member, for example snap fit arrangements, overlapping sleeve arrangements, screws, or the like. In a particularly preferred embodiment, the end wall parts comprise an end wall face and rim parts extending generally at right angles to the end wall face, which rim parts are configured to lie, in use, against the walls of the channel-shaped member on the outside or on the inside of the channel. This may define a stiff enough joint for no further connection to be required, but it is preferred that further overlapping sleeve members are provided for overlapping the walls of the channel-shaped member on the opposite side to the rim parts.

The end wall parts are suitably made of cast or moulded material, for example thermoplastic or metal, particularly uPVC or aluminium.

The end wall parts may additionally comprise means for engaging the trunking, in particular they may have engaging means for engaging the channel-wall members of the trunking.

Each of the channel-shaped member and the end wall parts may comprise knock-out portions which can be knocked-out in use to allow access for cables, fibres, etc.

In a particularly preferred embodiment, the channel-shaped member comprises an extruded member. This will make the formation of knock-out portions difficult, so that it is particularly preferred in this embodiment that the end wall parts comprise knock-out portions.

The cover means is provided for closing the open face of the channel-shaped member. The cover means may be of any suitable design. It is suitably made of cast, moulded or extruded material, for example thermoplastic material or metal, particularly uPVC or aluminium. It may engage the channel-shape member or the end wall parts or both of them by any suitable means, for example snap fit or screw connections. Preferably, a kit according to the invention comprises a set of different cover means, including cover means suitable for different numbers of accessories.

The cover means may comprise openings through which the accessory protrudes, for example a hole for a switch or a space for a three-pin socket.

In a preferred embodiment the cover means comprises means for engaging with the trunking and, separately, means for engaging the channel-shaped member, whereby the channel-shaped member is fixed in position in the trunking through its engagement with the cover means.

The means for engaging the trunking and the channel-shaped member may be any suitable means. For example, they may comprise snap-fit engaging means.

In a preferred embodiment, each end wall comprises an upwardly directed extension, for projecting above the level of the open face of the channel-shaped member, the cover means comprising an abutment against which the upwardly directed extension of the end wall part abuts, when in position, to prevent movement of the end wall out of engagement with the channel-shaped member in the longitudinal direction of the channel-shaped member.

The present invention will be further described by way of example only with reference to the accompanying drawings, in which:
Figure 1 shows a perspective view of a kit for forming an accessory mounting according to the present invention.
Figure 2 shows a view (partly in cross-section) of a cover means, seen from the end.
Figure 3 shows a view (partly in cross-section) of a cover means, seen from the side.
Figure 4 shows a view of a cover means in perspective.
Figure 5 shows a part cross-sectional view, along line II-II of the cover means, end wall and channel-shaped member when engaged together.

### Detailed Description of Drawings

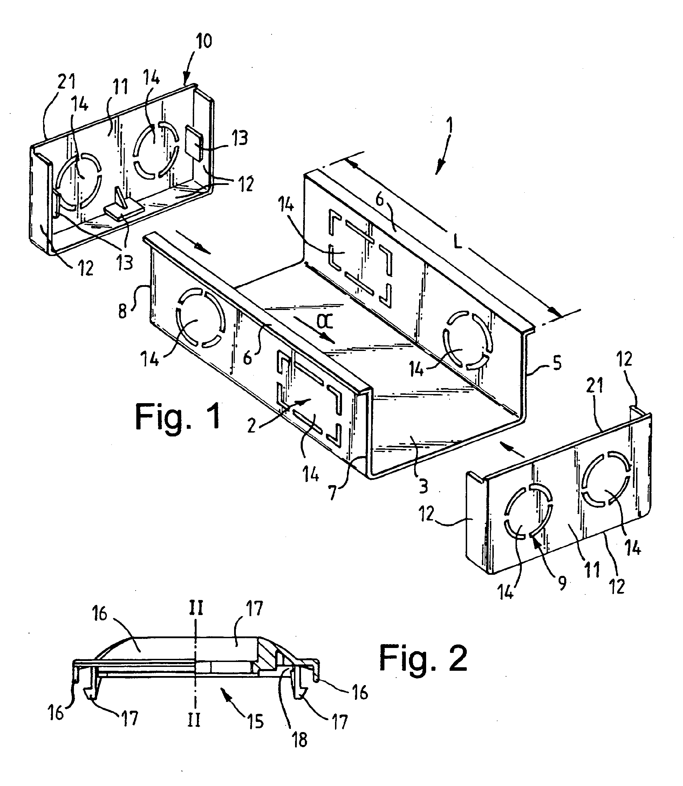

Figure 1 shows a kit for producing an accessory mounting according to the present invention. The kit (1) includes a channel-shaped member (2)comprising a longitudinally extending channel-floor member (3) and longitudinally extending channel-wall members (4) and (5) extending from the extremities of the floor member (3). A lip (6) is formed at the ends of wall members (4) and (5) for engagement with trunking (not shown).

The channel-shaped member (2) is supplied at or is cut to a desired length L which, in this case, is sufficient to accommodate two accessories (not shown).

The ends (7) and (8) of the channel-shaped member (2) lie in a plane at right angles to the longitudinal direction x of the channel-shaped member (2).

End wall parts (9) and (10) are provided for closing the ends (7) and (8) of the channel-shaped member. Each comprises an end wall face (11) and rim parts (12) extending around three sides of the end wall face (11). In use, the end wall parts (9) and (10) lie flush against the ends (7) and (8) of the channel-shaped member with the rim parts (12) overlapping the channel-wall members (4) and (50) and the channel-floor member (3) at the ends thereof. In order to provide a firm grip between the end wall parts (9) and (10) and the channel-shaped member (2), overlapping sleeve members (13) are provided on the inside of the end wall parts, to grip the channel-wall members (4) and (5) and the channel-floor member (3).

Each end wall part (9) and (10) comprises an extension in the form of a lip (21), whose function will be described further below.

Knock-out portions (14) are providedon the end wall parts (9) and (10) and the channel-shaped member (2), which can be knocked-out to provide access from the inside of the channel-shaped member (2) for cables, conductors etc. in trunking.

Figure 2 shows a view, partly in cross-section, of a cover means for use in the present invention. The cover means (15) comprises cast uPVC. It comprises an outer face (16) profiled to give a smooth, clean exterior appearance. It has an opening 17 through which accessories can project. The cover means (15) further comprises means (16), (17) for engaging with channel-wall members of trunking (not shown). The cover means (15) further comprises means (18) comprising a notch into which the lip (6) of the channel-shaped member (2) can be snap-fitted during assembly, whereby the channel-shaped member (2) is held in position by the cover means (15). The entire assembly can be fixed into trunking using the means (16) and (17).

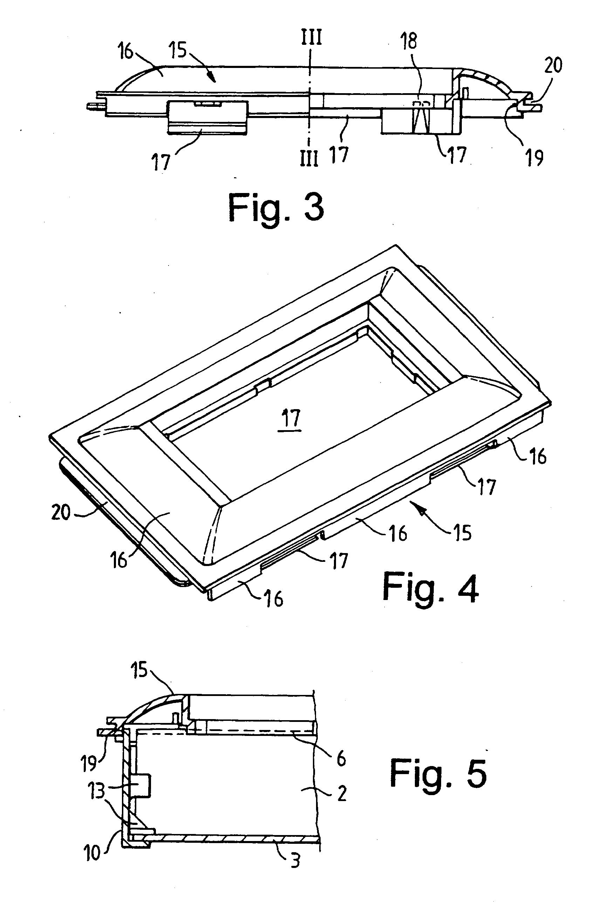

Figure 3 shows a side view, partially in cross-section, of the cover means (15). The position of notch (18) is shown on the right-hand side of the figure.

As shown in Figure 3, the cover means (15) further comprises an edge (19) forming an abutment against which the end wall members (9) or (10) can engage. The cover means (15) also comprises a notch (20) for engaging cover members of the trunking (not shown).

Figure 4 shows a view of the cover (15) in perspective, from the top, showing the longitudinally displaced positions of the means (16) and (17).

Figure 5 is a cross-sectional view, from the side, of the channel-shaped member (2) engaged with the end wall part (10) through the sleeve members (13). A projection in the form of a lip (21) can be seen extending from the end wall part (10) and abutting against abutment (19), thereby preventing longitudinal movement of the end wall part (10) and the channel-shaped member (2). The channel-shaped member is engaged by its lip (6) in the notch (18) (not shown).

## Claims

1. An accessory mounting (1) for use in trunking of the sort comprising a longitudinally extending channel of indefinite length defined by a longitudinally extending floor member and at least two longitudinally extending wall members projecting from the floor member, the accessory mounting (1) comprising
(a) an integrally formed channel-shaped member (2) extending for a defined length in the direction of the channel, the channel-shaped member (2) having first and second end parts (7, 8) and being configured to fit inside the channel of the trunking in use, and
(b) cover means (15),
the channel-shaped member (2) being engaged with the cover means (15) **characterized in that** the cover means (15) are engageable with the trunking, the channel-shaped member (2) being fixed in the trunking by the cover means (15).

2. An accessory mounting (1) according to claim 1, wherein the channel-shaped member (2) is of length sufficient to accommodate at least two accessories.

3. An accessory mounting (1) according to claim 1 or 2, further comprising end wall parts (9) engaged with the first and second end parts (7, 8) of the channel-shaped member (2).

4. An accessory mounting (1) according to claim 3, wherein the end wall parts (9) are releasably engaged with the end parts (7, 8) of the channel-shaped member (2).

5. An accessory mounting (1) according to any preceding claim, wherein the channel-shaped member (2) is formed by extrusion, moulding, forming or stamping.

6. A kit for forming an accessory mounting (1) for use in trunking of the sort comprising a longitudinally extending channel of indefinite length defined by a longitudinally extending floor member and at least two longitudinally extending wall members projecting from the floor member, the kit comprising:
(a) an integrally formed channel-shaped member (2) of indefinite length extending in the direction of the channel, the channel-shaped member (2) being configured to fit inside the channel of the trunking in use, and
(b) a cover means (15),
whereby, in use, the channel-shaped member (2) can be cut or divided to a length sufficient to accommodate a desired number of accessories, wherein the cover means (15) comprises means for engaging the channel-shaped member (2) **characterised in that** the cover means (15) is provided with means for engaging the trunking, the channel-shaped member(2) being fixable in the trunking by the cover means (15).

7. A kit according to claim 6, wherein the channel-shaped member (2) is of length sufficient to accommodate at least two accessories.

8. A kit according to claim 6 or 7, further comprising end wall parts (9) engageable with end parts (7, 8) of the channel-shaped member (2) to close the channel.

9. A kit according to claim 8, wherein the end wall parts (9) are releasably engageable with the ends (7, 8) of the channel-shaped member (2).

10. A kit according to claim 6, 7, 8 or 9, further comprising a set of cover means (15) suitable for different numbers of accessories.

## Patentansprüche

1. Zubehörteil-Halterung (1) zur Verwendung in Installationskanälen der Art, die einen sich in Längsrichtung erstreckenden Kanal mit unbestimmter Länge umfasst, definiert durch ein sich in Längsrichtung erstreckendes Bodenelement und wenigstens zwei sich in Längsrichtung erstreckende Wandelemente, die von dem Bodenelement vorspringen, wobei die Zubehörteil-Halterung (1) Folgendes umfasst:
(a) ein integral geformtes kanalförmiges Element (2), das sich über eine definierte Länge in der Richtung des Kanals erstreckt, wobei das kanalförmige Element (2) einen ersten und einen zweiten Endteil (7, 8) hat und dafür konfiguriert ist, bei Anwendung in den Kanal des Installationskanals zu passen, und
(b) Abdeckmittel (15),
wobei das kanalförmige Element (2) mit den Abdeckmitteln (15) in Eingriff gebracht ist, **dadurch gekennzeichnet, dass** die Abdeckmittel (15) mit dem Installationskanal in Eingriff gebracht werden können, wobei das kanalförmige Element (2) durch die Abdeckmittel (15) in dem Installationskanal befestigt wird.

2. Zubehörteil-Halterung (1) nach Anspruch 1, wobei das kanalförmige Element (2) eine ausreichende Länge hat, um wenigstens zwei Zubehörteile aufzunehmen.

3. Zubehörteil-Halterung (1) nach Anspruch 1 oder 2, die ferner Stirnwandteile (9) umfasst, die mit dem ersten und dem zweiten Endteil (7, 8) des kanalförmigen Elements (2) in Eingriff gebracht sind.

4. Zubehörteil-Halterung (1) nach Anspruch 3, wobei die Stirnwandteile (9) lösbar mit den Endteilen (7, 8) des kanalförmigen Element (2) in Eingriff gebracht sind.

5. Zubehörteil-Halterung (1) nach einem der vorhergehenden Ansprüche, wobei das kanalförmige Element (2) durch Strangpressen, Nachformen, Umformen oder Prägen geformt ist.

6. Ausrüstung zum Formen einer Zubehörteil-Halterung (1) zur Verwendung in Installationskanälen der Art, die einen sich in Längsrichtung erstreckenden Kanal mit unbestimmter Länge umfasst, definiert durch ein sich in Längsrichtung erstreckendes Bodenelement und wenigstens zwei sich in Längsrichtung erstreckende Wandelemente, die von dem Bodenelement vorspringen, wobei die Ausrüstung Folgendes umfasst:
(a) ein integral geformtes kanalförmiges Element (2) mit einer unbestimmten Länge, das sich in der Richtung des Kanals erstreckt, wobei das kanalförmige Element (2) dafür konfiguriert ist, bei Anwendung in den Kanal des Installationskanals zu passen, und
(b) ein Abdeckmittel (15),
wobei bei Anwendung das kanalförmige Element (2) auf eine ausreichende Länge geschnitten oder geteilt werden kann, um eine gewünschte Zahl von Zubehörteilen aufzunehmen, wobei das Abdeckmittel (15) Mittel umfasst, um das kanalförmige Element (2) in Eingriff zu nehmen, **dadurch gekennzeichnet, dass** das Abdeckmittel (15) mit Mitteln versehen ist, um den Installationskanal in Eingriff zu nehmen, wobei das kanalförmige Element (2) durch das Abdeckmittel (15) in dem Installationskanal befestigt werden kann.

7. Ausrüstung nach Anspruch 6, wobei das kanalförmige Element (2) eine ausreichende Länge hat, um wenigstens zwei Zubehörteile aufzunehmen.

8. Ausrüstung nach Anspruch 6 oder 7, die ferner Stirnwandteile (9) umfasst, die mit dem ersten und dem zweiten Endteil (7, 8) des kanalförmigen Elements (2) in Eingriff gebracht werden können, um den Kanal zu verschließen.

9. Ausrüstung nach Anspruch 8, wobei die Stirnwandteile (9) lösbar mit den Enden (7, 8) des kanalförmigen Element (2) in Eingriff gebracht werden können.

10. Ausrüstung nach Anspruch 6, 7, 8 oder 9, die ferner einen Satz von Abdeckmittel (15), geeignet für unterschiedliche Zahlen von Zubehörteilen, umfasst.

## Revendications

1. Support de montage d'accessoires (1) destiné à être utilisé dans une goulotte du type comprenant un canal à extension longitudinale d'une longueur indéfinie, définie par un élément de plancher à extension longitudinale et au moins deux éléments de paroi à extension longitudinale débordant de l'élément de plancher, le support de montage d'accessoires (1) comprenant :
(a) un élément en forme de canal formé d'une seule pièce (2), s'étendant sur une longueur définie dans la direction du canal, l'élément en forme de canal (2) comportant des première et deuxième parties d'extrémité (7, 8) et étant configuré de sorte à pouvoir être ajusté à l'intérieur du canal de la goulotte en service ; et
(b) des moyens de couverture (15) ;
l'élément en forme de canal (2) étant engagé dans les moyens de couverture (15), **caractérisé en ce que** les moyens de couverture (15) peuvent être engagés dans la goulotte, l'élément en forme de canal (2) étant fixé dans la goulotte par les moyens de couverture (15).

2. Support de montage d'accessoires (1) selon la revendication 1, dans lequel l'élément en forme de canal (2) a une longueur suffisante pour recevoir au moins deux accessoires.

3. Support de montage d'accessoires (1) selon les revendications 1 ou 2, comprenant en outre des parties d'extrémité de paroi (9) engagées dans les première et deuxième parties d'extrémité (7, 8) de l'élément en forme de canal (2).

4. Support de montage d'accessoires (1) selon la revendication 3, dans lequel les parties d'extrémité de paroi (9) sont engagées de manière amovible dans les parties d'extrémité (7, 8) de l'élément en forme de canal (2).

5. Support de montage d'accessoires (1) selon l'une quelconque des revendications précédentes, dans lequel l'élément en forme de canal (2) est formé par extrusion, moulage, formage ou estampage.

6. Kit pour former un support de montage d'accessoires (1) destiné à être utilisé dans une goulotte du type comprenant un canal à extension longitudinale d'une longueur indéfinie, définie par un élément de plancher à extension longitudinale et au moins deux éléments de paroi à extension longitudinale débordant de l'élément de plancher, le kit comprenant :
(a) un élément en forme de canal formé d'une seule pièce (2), ayant une longueur indéfinie et s'étendant dans la direction du canal, l'élément en forme de canal (2) étant configuré de sorte à pouvoir être ajusté à l'intérieur du canal de la goulotte en service ; et
(b) un moyen de couverture (15) ;
l'élément en forme de canal (2) pouvant en service être coupé ou divisé à une longueur suffisante pour recevoir un nombre voulu d'accessoires, le moyen de couverture (15) comprenant un moyen destiné à s'engager dans l'élément en forme de canal (2), **caractérisé en ce que** le moyen de couverture (15) comporte des moyens destinés à s'engager dans la goulotte, l'élément en forme de canal (2) pouvant être fixé dans la goulotte par le moyen de couverture (15).

7. Kit selon la revendication 6, dans lequel l'élément en forme de canal (2) a une longueur suffisante pour recevoir au moins deux accessoires.

8. Kit selon les revendications 6 ou 7, comprenant en outre des parties d'extrémité de paroi (9) pouvant s'engager dans des parties d'extrémité (7, 8) de l'élément en forme de canal (2) pour fermer le canal.

9. Kit selon la revendication 8, dans lequel les parties d'extrémité de paroi (9) peuvent s'engager de manière amovible dans les extrémités (7, 8) de l'élément en forme de canal (2).

10. Kit selon les revendications 6, 7, 8 ou 9, comprenant en outre un groupe de moyens de couverture (15) appropriés pour différents nombres d'accessoires.
